# EUROPÄISCHE PATENTSCHRIFT

(11) **EP 2 435 724 B1**
(45) Veröffentlichungstag und Bekanntmachung des Hinweises auf die Patenterteilung: **26.11.2014**
(21) Anmeldenummer: 10724286.9
(22) Anmeldetag: 26.05.2010
(51) Int. Cl.: F16D 69/02, F16D 1/08, F16B 2/00, F16B 39/22

(54) **SUSPENSION ZUR HERSTELLUNG EINER REIBWERTERHÖHENDEN SCHICHT, FORMKÖRPER MIT EINER SOLCHEN REIBWERTERHÖHENDEN SCHICHT, VERFAHREN ZU DESSEN HERSTELLUNG UND DESSEN VERWENDUNG**
SUSPENSION FOR PRODUCING A LAYER INCREASING THE COEFFICIENT OF FRICTION, MOLDED PART HAVING SUCH A LAYER INCREASING THE COEFFICIENT OF FRICTION, METHOD FOR THE PRODUCTION THEREOF, AND USE THEREOF
SUSPENSION POUR LA FABRICATION D'UNE COUCHE AUGMENTANT LE COEFFICIENT DE FRICTION, CORPS MOULÉ POURVU DE LADITE COUCHE AUGMENTANT LE COEFFICIENT DE FRICTION, SON PROCÉDÉ DE FABRICATION ET SON UTILISATION

(30) Priorität: 29.05.2009 DE 102009023402
(43) Veröffentlichungstag der Anmeldung: 04.04.2012
(73) Patentinhaber: ESK Ceramics GmbH & Co.KG, 87437 Kempten (DE)
(72) Erfinder: MEYER, Jürgen, 87437 Kempten (DE); SÖRGEL, Timo, 71384 Weinstadt (DE); UIBEL, Krishna, 87448 Waltenhofen (DE); SCHREINER, Sven, 81667 München (DE)
(74) Vertreter: Ter Meer Steinmeister & Partner
(86) Internationale Anmeldenummer: PCT/EP2010/003198
(87) Internationale Veröffentlichungsnummer: WO 2010/136190

(56) Entgegenhaltungen:
- EP-A1- 0 961 038
- EP-A1- 2 058 289
- EP-A2- 1 780 307

## Beschreibung

### Gebiet der Erfindung

Die vorliegende Erfindung betrifft eine Suspension zur Herstellung einer reibwerterhöhenden Schicht auf einem Substrat, einen Formkörper aus einem Substrat und einer darauf aufgebrachten, reibwerterhöhenden Schicht, ein Verfahren zur Herstellung eines solchen Formkörpers sowie die Verwendung solcher Formkörper zur Herstellung von Press- oder Klemmverbindungen oder als Sicherungselement für Schraubverbindungen. Die erfindungsgemäß vorgesehene reibwerterhöhende Schicht zeichnet sich durch ihre haftreibwerterhöhenden Eigenschaften, Temperatur- und Korrosionsstabilität aus und ist auf großflächige Bauteile und unterschiedliche Werkstoffe aufbringbar.

### Hintergrund der Erfindung

Kraftschlüssige Verbindungen werden in allen Bereichen des Maschinenbaus häufig zur Übertragung von Querkräften oder Drehmomenten eingesetzt. Die Größe der jeweils übertragbaren Kraft hängt neben den konstruktiven Gegebenheiten in erster Linie vom Haftreibwert der miteinander verbundenen Bauteiloberflächen ab. Stahl/Stahl-Paarungen weisen typischerweise Haftreibwerte von 0,15 auf, was bei den zunehmend steigenden Anforderungen an Maschinenbauteile häufig für eine sichere kraftschlüssige Verbindung nicht ausreicht.

Durch Form- bzw. Mikroformschluss lässt sich die übertragbare Kraft bei gleichbleibender Flächenpressung erhöhen. Dieses Prinzip ist schon seit langer Zeit bekannt, beispielsweise durch Einbringen von Sand in den Fügespalt. Diese Art der Partikeleinbringung ist jedoch sehr undefiniert und bei gröberen Partikeln, die bevorzugt im Fügespalt hängen bleiben, erhöht sich die Gefahr einer Risseinleitung im Grundmaterial erheblich.

Ebenso werden Schraubverbindungen in allen Bereichen des Maschinen-, Anlagen- und Kraftfahrzeugbaus eingesetzt, um kraftschlüssige Verbindungen zu erzielen. Insbesondere bei dynamischer Belastung der Schraubverbindungen gewährleisten viele der herkömmlichen Schraubverbindungen keine ausreichende Sicherheit gegen ein selbsttätiges Lösen der Schraubverbindungen. Man ist daher bestrebt, Maßnahmen zur Sicherung von Schraubverbindungen vorzusehen, um bei hohen und insbesondere dynamischen Belastungen ein selbsttätiges Lösen der Schraubverbindungen zu verhindern.

### Stand der Technik

Eine technisch in vielen Fällen einsetzbare Variante für eine reibwerterhöhende Schicht ist die galvanische oder chemische (außenstromlose) Aufbringung einer metallischen Schicht, in die Hartstoffpartikel eingelagert sind. Galvanisch aufgebrachte Dispersionsschichten sind z. B. beschrieben in Peeken et al, ant-Antriebstechnik 1981, 20.

Neben der direkten Bauteilebeschichtung hat sich auch die haftreibwerterhöhende Beschichtung von dünnen Folien als vorteilhaft erwiesen. Dies ist in der EP 0 961 038 A1 beschrieben. Derartige beschichtete Folien kommen dann zum Einsatz, wenn die gewünschte Beschichtung aus Verfahrens- oder Kostengründen auf keine der beiden Komponenten aufgebracht werden kann. Der Mikroformschluss erfolgt dann über die zwischen die zu fügenden Flächen eingelegte Folie.

In der WO 2008/095216 A2 wird ein Kettenrad mit einem Reibbelag aus einem synthetischen Bindemittel mit aufgebrachten Reibpartikeln beschrieben. Das synthetische Bindemittel ist ausgewählt aus einer Gruppe von organischen Polymeren. Die hier vorgeschlagene Beschichtung soll eine zu den bekannten Methoden der Erhöhung der Verdrehsicherheit an Kettenrädern zumindest annähernd gleichwertige Alternativlösung sein, die im Hinblick auf die Serienproduktion kostengünstiger ist.

In der EP 1 959 152 A2 wird ein Reibbelag beschrieben, der eine Bindemittelmatrix und Reibpartikel umfasst, wobei wenigstens 20 % der Reibpartikel einen größeren Durchmesser als die Dicke der Schicht aufweisen. Die Reibpartikel werden entweder auf das Bindemittel aufgestreut oder es wird eine Dispersion aus dem Bindemittel und den Reibpartikeln hergestellt und diese Dispersion wird auf die Funktionsfläche des Reibbauteils aufgetragen. Als Bindemittel werden organische Polymere, bevorzugt ein Phenolharz und als Reibpartikel werden bevorzugt Siliciumcarbid-Partikel eingesetzt.

Die in WO 2008/095216 A2 und EP 1 959 152 A2 beschriebenen Beschichtungen mit den rein organischen Polymerbindern sind darin nachteilig, dass diese Binder altern und spröde werden und sich bei Temperaturbelastung zersetzen können. Dadurch kann es einerseits durch Diffusionsvorgänge zu einer nachteiligen Veränderung im oberflächennahen Bereich der Fügepartner kommen, und andererseits kann die Bindemittelmatrix zersetzt werden, so dass es zum Ausbrechen von Partikeln und zu Setzungsphänomenen der Verbindung kommen kann und die reibwerterhöhende Wirkung nicht mehr zuverlässig erreicht wird.

Bei den rein organischen Polymerbindern der WO 2008/095216 A2 und EP 1 959 152 A2 besteht zudem die Gefahr, dass die Reibpartikel durch das Bindemittel nicht genügend benetzt werden und damit die Reibpartikel nicht ausreichend in den Reibbelag eingebettet sind.

Haftreibwerterhöhende Beschichtungen nach WO 2008/095216 A2 und auch EP 1 959 152 A2 sind nicht geeignet, wenn eine möglichst hohe Reibwerterhöhung gefordert ist.

Mit den von Peeken et al, ant-Antriebstechnik 1981, 20 beschriebenen Dispersionsschichten und den in der EP 0 961 038 A1 beschriebenen dispersionsbeschichteten Folien werden hohe Reibwerte erzielt, die auch die heutigen technischen Anforderungen an kraftschlüssige Verbindungen erfüllen.

Nachteile offenbaren diese Beschichtungen, wenn es um die Beschichtung sehr großer Bauteile geht. Beispielsweise können Antriebswellen, Lagersitze und Naben großer Aggregate wie Schiffsantriebe und Windkraftanlagen auf Grund der begrenzten Beschichtungsbadabmessungen überhaupt nicht oder nicht wirtschaftlich beschichtet werden.

Neben den metallischen Leichtbaustoffen finden auch vermehrt Kunststoffe und Keramiken Verwendung als leichte Konstruktionswerkstoffe. In kraftschlüssigen Verbindungen ergibt sich dadurch die Notwendigkeit, elektrisch nicht leitende Reibflächen mit einer reibwerterhöhenden Beschichtung zu versehen. Dies kann bei Verwendung der galvanisch abgeschiedenen Dispersionsschichten nicht oder nur mit Einschränkungen gelöst werden, da nur wenige Kunststoffe beschichtbar sind. Zwar ist durch eine entsprechende Aktivierung die Beschichtung von Nichtleitern möglich, doch sind solche Beschichtungen in der Regel nicht wirtschaftlich darstellbar, und zudem ist die Schichthaftung schlechter als auf metallischen Substraten.

In der Motorentechnik führen Maßnahmen zur Verringerung der Emissionen und zur Reduzierung des Kraftstoffverbrauchs zu neuen potentiellen Anwendungen für reibwerterhöhende Beschichtungen im Bereich der Abgasregelung und des Turboladers, die selbst die Temperaturgrenzen der galvanisch abgeschiedenen Dispersionsschichten überschreiten. Gefordert wird für diese Anwendungen eine Temperaturbeständigkeit bis etwa 850°C. Bei diesen Temperaturen tritt bei den üblicherweise verwendeten Chemisch Nickel-Schichten bereits ein Übergang in den schmelzflüssigen Bereich auf. Diese Schichten sind daher für einen Dauereinsatz nur bis etwa 450°C einsetzbar.

Die Temperaturbeständigkeit der in der WO 2008/095216 A2 angeführten Polymerbeschichtungen ist ebenfalls eingeschränkt, Einsatztemperaturen über 300°C sind hier kaum erreichbar. So sind diese Beschichtungen selbst bei den meisten Querpresssitzen (Welle-Nabe-Verbindungen) nicht verwendbar und eine Anwendung in den beschriebenen Hochtemperaturanwendungen ist nicht möglich.

Es können allgemein zwei Gruppen von Schraubensicherungen unterschieden werden, mechanische und chemische. Erstere sind i. d. R. Elemente, die zwischen Schraubenkopf und Auflage eingelegt werden, und mit ihrer makroskopischen Strukturierung zu einem Makroformschluß mit dem Schraubenkopf und dem Auflagematerial führen. Dadurch entstehen makroskopische Verletzungen dieser Gegenflächen, was sich auch negativ auf die Wiederverschraubbarkeit auswirkt. Außerdem können die Setzungserscheinungen bei makroskopisch strukturierten, mechanischen Schraubensicherungen des Stand der Technik ausgeprägt sein, was hinsichtlich der Sicherungswirkung nachteilig ist. Die zweite Gruppe von Schraubensicherungen basieren auf einer chemischen Sicherung, wobei Klebstoffe, ggf. zunächst mikroverkapselt und in Form mehrerer Komponenten, direkt auf das Schraubengewinde aufgebracht werden. Nachteile dieser Sicherungen liegen u. a. in der geringen Temperaturbeständigkeit.

### Aufgabe der Erfindung

Der Erfindung liegt daher die Aufgabe zugrunde, eine reibwerterhöhende Schicht auf einem Substrat zur Verfügung zu stellen, welche die Nachteile des Standes der Technik vermeidet, die insbesondere Reibwerte aufweist, die denen gemäß EP 0 961 038 A1 zumindest entsprechen und die gemäß der WO 2008/095216 A2 übertreffen, welche temperatur- und korrosionsstabil und elektrisch nicht leitend ist und auch auf großflächige Bauteile und unterschiedliche Werkstoffe applizierbar ist. Die erfindungsgemäße, reibwerterhöhende Schicht soll sich insbesondere eignen zur Herstellung von Press- oder Klemmverbindungen, als Sicherungselement für Schraubverbindungen, als auch zur Direktbeschichtung von Schraubverbindungen zur Schraubensicherung.

### Zusammenfassung der Erfindung

Die oben genannte Aufgabe wird gelöst durch eine Suspension zur Herstellung einer reibwerterhöhenden Schicht gemäß Anspruch 1, einen Formkörper gemäß Anspruch 12, ein Verfahren zur Herstellung eines solchen Formkörpers gemäß Anspruch 17 sowie die Verwendung eines solchen Formkörpers gemäß den Ansprüchen 20 und 23. Vorteilhafte bzw. besonders zweckmäßige Ausgestaltungen des Anmeldungsgegenstandes sind in den Unteransprüchen angegeben.

Gegenstand der Erfindung ist somit eine Suspension zur Herstellung einer reibwerterhöhenden Schicht auf einem Substrat, umfassend ein flüssiges Suspensionsmedium, ein überwiegend anorganisches Bindemittel oder dessen Vorläuferverbindungen und suspendierte Hartstoffpartikel.

Gegenstand der Erfindung ist weiterhin ein Formkörper, umfassend ein Substrat und eine auf mindestens einen Teil der Oberfläche des Substrats aufgebrachte, reibwerterhöhende Schicht, die eine überwiegend anorganische Bindemittelmatrix und darin eingelagerte Hartstoffpartikel umfasst, wobei die Dicke der Bindemittelmatrix geringer ist als die mittlere Partikelgröße der Hartstoffpartikel, so dass die Hartstoffpartikel aus der Bindemittelmatrix herausragen, und wobei die reibwerterhöhende Schicht aus einer erfindungsgemäßen Suspension gebildet wurde.

Gegenstand der Erfindung ist ebenfalls ein Verfahren zur Herstellung eines wie oben beschriebenen Formkörpers, umfassend die Schritte
a) Vorsehen eines Substrats,
b) Auftragen einer wie oben beschriebenen, erfindungsgemäßen Suspension auf mindestens einem Teil der Oberfläche des Substrats
c) Trocknen der so erhaltenen Beschichtung, und
d) gegebenenfalls Temperaturbehandlung der in Schritt c) erhaltenen Beschichtung, um diese zu härten, und/oder mechanische Behandlung der so erhaltenen Beschichtung.

Gegenstand der Erfindung ist ebenfalls die Verwendung eines erfindungsgemäßen Formkörpers zur Herstellung von Press- oder Klemmverbindungen in einem Verbund mit einem wahlweise ebenfalls eine reibwerterhöhende Schicht aufweisenden Formkörper, vorzugsweise zur Herstellung von Schrumpfverbindungen wie Welle-Nabe-Verbindungen und Flanschverbindungen sowie andererseits die Verwendung eines erfindungsgemäßen Formkörpers als Sicherungselement für Schraubverbindungen, das als Zwischenlage zwischen Schraubenkopf und Auflagewerkstoff und/oder zwischen Mutter und Auflagewerkstoff eingesetzt wird. Zur Sicherung von Schraubenverbindungen kann die erfindungsgemäße Schicht außerdem direkt unter den Schraubenkopf bzw. auf die Mutter oder den Auflagewerkstoff oder direkt auf das Gewinde aufgebracht werden.

Gemäß der Erfindung gelingt es, haftreibwerterhöhende Beschichtungen mit eingelagerten Hartstoffpartikeln auf einfache, definierte und reproduzierbare Weise auf ein Substrat aufzubringen. Hierbei wird ein Formkörper erhalten, welcher vollständig oder in Teilbereichen seiner Oberfläche mit einer gut haftenden, haftreibwerterhöhenden Beschichtung versehen ist, wobei die Beschichtung eine Bindemittelmatrix umfasst, in welcher vorzugsweise in einer Monolage Hartstoffpartikel eingelagert sind, wobei diese zwar von der Bindemittelmatrix festgehalten werden, jedoch nicht vollständig darin eingebettet sind.

Die fest haftende Schicht zeichnet sich durch ihre Temperaturstabilität, Korrosionsstabilität, Applizierbarkeit auf großflächigen Bauteilen und unterschiedlichen Werkstoffen sowie haftreibwerterhöhende Eigenschaften aus. Die haftreibwerterhöhenden Eigenschaften werden auch bei unterschiedlich harten Reibpartnern erzielt. Mit den erfindungsgemäßen Beschichtungen können Haftreibwerte erhalten werden, die die der WO 2008/095216 A2 und EP 1 959 152 A2 übertreffen und denen gemäß EP 0 961 038 A1 zumindest entsprechen.

Überraschenderweise hat die Bindematrix selbst offensichtlich reibwerterhöhende Eigenschaften. Dies kann dadurch erklärt werden, dass die Hartstoffpartikel in beide Oberflächen, die des Substrats und die des Fügepartners, eindringen und daher kein Mikrospalt verbleibt und ein signifikanter Kraftanteil über die Matrix eingeleitet wird. Eine mögliche Erklärung für die höheren Reibwerte gegenüber WO 2008/095216 A2 und EP 1 959 152 A2 könnte die im Vergleich zu organischen Bindemittelmatrizes in der Regel höhere Oberflächenenergie der erfindungsgemäß eingesetzten Bindemittel sein. Bei galvanischen Dispersionsschichten dringen die Hartstoffpartikel nicht in das beschichtete Substrat, sondern nur in den Fügepartner ein, und es besteht bei Standardflächenpressungen von 50 MPa in der Regel ein Mikrospalt, im Unterschied zu den erfindungsgemäßen Beschichtungen.

Die erfindungsgemäße Beschichtung kann auf einfache Weise, definiert und reproduzierbar aufgebracht werden. Die ersten beiden Eigenschaften (einfach, definiert) sind Vorteile gegenüber galvanischen Dispersionsbeschichtungen, da diese nicht auf einfache Weise aufgebracht werden können und auch nur bedingt definiert auf bestimmte Bereiche, da ein Maskieren aufwändig ist.

Die erfindungsgemäße Schicht kann außerdem praktisch ohne Bauteilgrößenbeschränkung wirtschaftlich aufgebracht werden, was ebenfalls als Vorteil gegenüber der aufwändigeren Direktbeschichtung aus Peeken et al. anzusehen ist.

Die erfindungsgemäßen Schichten können im Motoren- und Getriebebau eingesetzt werden. Zudem kann die erfindungsgemäße Beschichtung auf alle bekannten Konstruktionswerkstoffe haftfest und wirtschaftlich aufgebracht werden.

Die erfindungsgemäßen Schichten zeigen im Einsatz gegenüber den in WO 2008/095216 A2 und EP 1 959 152 A2 beschriebenen Schichten eine stärkere Erhöhung des Haftreibwerts bei gleichen Reibpartnern (s. Beispiele E12 und E14 und Vergleichsbeispiel V10).

Es konnte gezeigt werden, dass gemäß der Erfindung durchwegs vergleichsweise sehr hohe Haftreibwerte zu erzielen sind, die sogar vergleichbar sind mit denen, die mit Schichten gemäß EP 0 961 038 A1 erreicht werden. Darüberhinaus ist in einigen Fällen sogar eine signifikante Erhöhung über den heutigen Stand der Technik hinaus möglich (siehe Beispiel E8 und Vergleichsbeispiel V9).

Um möglichst hohe Haftreibwerte in der Anwendung zu gewährleisten, ist es gemäß der Erfindung von Vorteil, wenn die aufgebrachten Hartstoffpartikel beim Verpressen des beschichteten mit dem unbeschichteten Bauteil sowohl signifikant in das Substrat als auch in den Gegenkörper eindringen, im Unterschied zu galvanischen Beschichtungen, bei denen die Hartstoffpartikel nicht in das beschichtete Substrat eindringen, sondern nur in den Fügepartner.

Überraschenderweise hat sich gezeigt, dass dies selbst bei großen Härteunterschieden zwischen Substratmaterial und Gegenkörper möglich ist, so dass die erfindungsgemäßen Beschichtungen selbst bei großen Härteunterschieden zwischen Substratmaterial und Gegenkörper eingesetzt werden können und es können bei solchen Materialpaarungen mit großen Härteunterschieden höhere Reibwerte erzielt werden, wie beispielsweise bei AlMgSi1 gepaart mit GG25, siehe Beispiel E4.

Aufgrund der sehr homogenen Schichtdickenverteilung und sehr genau einstellbaren, vergleichsweise geringen Schichtdicke (Schichtdicken von nur 5 bis 10 µm können reproduzierbar erhalten werden) können Partikel mit der für die Funktion der Reibwerterhöhung minimal erforderlichen Partikelgröße verwendet werden, so dass die Gefahr einer Schädigung des Substrates durch Risseinleitung auf ein Minimum reduziert wird.

Die Bindematrix der erfindungsgemäßen Beschichtung kann in ihrer Schichtdicke und Schichtdickenverteilung sehr kontrolliert aufgebracht werden. Dies ist wichtig, da somit sichergestellt werden kann, dass sich jeweils nur eine Lage von Hartstoffpartikeln auf der Oberfläche befindet und diese Partikel noch genügend Überstand haben, um sich unter den Bedingungen der späteren Anwendung zuverlässig in die Gegenfläche eindrücken zu können.

Die Beschichtung kann problemlos mit vergleichsweise geringem Aufwand selektiv aufgebracht werden, was vor allem dann besonders wichtig ist, wenn die Schicht außerhalb der Funktionsfläche nicht nur überflüssig, sondern insbesondere unzulässig ist. Dies ist beispielsweise bei Bauteilen der Fall, an deren Oberfläche an verschiedenen Stellen unterschiedliche funktionale Anforderungen gestellt werden, wie etwa bei reibwerterhöhenden neben reibwerterniedrigenden Oberflächenbereichen. Dies ist ein Vorteil gegenüber den Direktbeschichtungen aus Peeken et al., da die Gefahr einer Unterwanderung der Abdeckungen für die erfindungsgemäßen Beschichtungen geringer ist als bei außenstromlosen oder galvanischen Verfahren.

Eine gute bis sehr gute Schichthaftung lässt sich auf verschiedensten Substratmaterialien realisieren. So können beispielsweise problemlos Metalle, oxidische und nichtoxidische Keramiken, Kunststoffe, Gläser oder auch organische Materialien wie beispielsweise Holz, oder auch Kompositmaterialien aus diesen Werkstoffen beschichtet werden.

Die Temperaturbeständigkeit der Schichten kann je nach Schichtsystem sehr hoch sein, Einsatztemperaturen über 1000°C sind möglich. Die gute Temperaturbeständigkeit der erfindungsgemäßen Schichten ist insbesondere dann gegeben, wenn eine Sol-Gel-Matrix komplett "keramisiert" ist, d. h. keine organischen Gruppen mehr enthält und als rein anorganische Bindemittelmatrix vorliegt. Die erzielbare Temperaturbeständigkeit geht weit über die der meisten Substrate hinaus. Aufgrund der meist ebenfalls sehr guten Temperaturbeständigkeit der eingelagerten Hartstoffpartikel wird die maximale Einsatztemperatur in den meisten Fällen allein durch das Substratmaterial bestimmt und begrenzt. Dies ist vor allem für Hochtemperaturanwendungen wichtig (s. oben beim Stand der Technik, Beispiel aus der Motortechnik), in denen keine organischen Polymerbeschichtungen und teilweise auch keine metallischen Beschichtungen wie beispielsweise Chemisch Nickel eingesetzt werden können, da diese aufgrund von Erweichen/Schmelzen ihre Funktion bei Temperaturen ab ca. 870°C (abhängig vom Phosphorgehalt) verlieren. Sie können im Dauereinsatz daher nur bis etwa 450°C eingesetzt werden.

Im Gegensatz zu den organischen Polymerbeschichtungen der WO 2008/095216 A2 und EP 1 959 152 A2 ist die Gefahr des Alterns bei den erfindungsgemäßen Beschichtungen deutlich vermindert. Es findet keine Zersetzung der Bindemittelmatrix im Einsatz statt und die Beschichtungen können dauerhaft eingesetzt werden. Dies gilt insbesondere für die rein anorganischen Bindemittelmatrizes bzw. für Bindemittelmatrizes mit überwiegend anorganischem Anteil.

Ein weiterer Vorteil der erfindungsgemäßen Schichten ist, dass bei Paarung von unterschiedlichen Reibpartnern die Gefahr der Kontaktkorrosion stark vermindert ist, da die Beschichtung elektrisch nichtleitend ist, so dass es keinen metallischen Kontakt der beiden Oberflächen der Reibpartner gibt. Die erfindungsgemäßen Beschichtungen verringern das Korrosionsrisiko für den Substratwerkstoff.

Das Aufbringen der Schicht kann, verglichen mit galvanischen und vor allem chemischen (außenstromlosen) Verfahren (Chemisch Nickel ist beispielsweise beschrieben in N. Kanani, Chemische Vernicklung, 1. Auflage. Leuze, Bad Saulgau, 2007), in sehr kurzer Zeit erfolgen, wobei durch die vergleichsweise geringen Anforderungen an die Maskiertechnik auch eine vollständige Automation möglich ist. Eine solche Beschichtungsanlage ist direkt in eine Produktionslinie integrierbar. Damit lassen sich hohe Aufwands- und Kosteneinsparungen erzielen, wie etwa durch eine Verringerung der Abhängigkeit von Lieferanten, die Einsparung von Lagerplatz und Zeit sowie logistische Vorteile, da die zu beschichtenden Teile nicht zu einem Beschichter hin und wieder zurück geschickt werden müssen.

Im Gegensatz zur Einbringung der reibwerterhöhenden Schicht in den Fügespalt über die Montage einer beschichteten Folie gemäß EP 0 961 038 A1, woraus je nach Foliendicke ein erhebliches Aufmaß resultiert, werden bei der Aufbringung der hier beschriebenen Schicht auf eine der beiden zu fügenden Oberflächen die Toleranzen des Gesamtsystems praktisch niemals überschritten. Dies ist bei sehr strengen Toleranzanforderungen und auch unter dem Aspekt der Bauraumminimierung von Vorteil.

Durch eine ausgeprägte Variabilität in ihrer Zusammensetzung lässt sich insbesondere eine Sol-Gel-Schichtmatrix durch Zusätze weiter in ihren Eigenschaften an die jeweiligen Erfordernisse anpassen. So kann beispielsweise die Schichthaftung und mechanische Beständigkeit der Schicht durch Zusatz von geeigneten Nanopartikeln verbessert werden. Außerdem lässt sich der thermische Ausdehnungskoeffizient der Schicht in weiten Bereichen an das Substratmaterial anpassen, was beispielsweise von Vorteil ist, wenn das beschichtete Substrat unmittelbar vor einem Fügeprozess wie z. B. an einer Welle/Nabe-Verbindung über eine Temperaturerhöhung gedehnt werden muss. Die Anpassung an das Substratmaterial kann durch Einlagerung von Füllstoffen oder Nanopartikeln erfolgen. Typischerweise liegt die Fügetemperatur des Nabepartners bei > 300°C, was die Verwendung von organischen Matrizes gemäß der WO 2008/095216 A2 und EP 1 959 152 A2 praktisch ausschließt.

### Detaillierte Beschreibung der Erfindung

Die erfindungsgemäße Beschichtungssuspension enthält ein flüssiges Suspensionsmedium, ein überwiegend anorganisches Bindemittel und suspendierte Hartstoffpartikel.

Das flüssige Suspensionsmedium kann aus Wasser, wasserhaltigen Lösungsmitteln, alkoholischen Lösungsmitteln, wie beispielsweise Ethanol, und Mischungen hiervon gewählt werden.

Das überwiegend anorganische Bindemittel kann einen keramischen Stoff oder einen Vorläufer eines keramischen Stoffes umfassen. Das Bindemittel kann dabei ein anorganischer und/oder mineralischer oder organisch modifizierter anorganischer und/oder mineralischer Stoff sein, der darüber hinaus mit organischen Zusatzstoffen und/oder anorganischen Feststoffpartikeln versetzt sein kann. Unter "überwiegend anorganisches Bindemittel" wird hierin ein Bindemittel verstanden, das in der Regel mehr als 50% anorganische Bestandteile umfasst.

Das Bindemittel (in der Beschichtungssuspension) kann Vorstufen eines oder mehrerer anorganischer Stoffe und/oder Glasvorstufen enthalten. Bevorzugt wird ein Bindemittel aus der Herstellung über einen Sol-Gel-Prozess ("Sol-Gel-Bindemittel") eingesetzt. Vorzugsweise ist das Bindemittel ein SiO₂-basiertes Bindemittel.

Weiter vorzugsweise ist das Bindemittel ein Nanokomposit aus siliciumorganischen SiO₂-Vorstufen aus der Herstellung über ein Sol-Gel-Verfahren, enthaltend nanoskalige Feststoffteilchen. Diese nanoskaligen Feststoffteilchen weisen vorzugsweise eine mittlere Teilchengröße bis zu 100 nm auf und sind vorzugsweise ausgewählt aus Metalloxidteilchen, ausgewählt aus SiO₂, TiO₂, ZrO₂, Al₂O₃, AlOOH, Y₂O₃ und CeO₂, c-BN, BaSO₄, Mischungen dieser oder Vorstufen dieser nanoskaligen Feststoffteilchen, welche über einen Sol-Gel-Prozess in diese Feststoffteilchen umgewandelt werden, weiter vorzugsweise SiO₂-Feststoffteilchen.

Weiterhin kann das Bindemittel anorganische Füllstoffe und organische Hilfsstoffe enthalten. Vorzugsweise werden die anorganischen Füllstoffe mit einer mittleren Teilchengröße von bis zu 5 µm, insbesondere von bis zu 1 µm, und ausgewählt aus Oxiden, Nitriden, Carbiden und Diamant eingesetzt. Organische Hilfsstoffe können beispielsweise als Verflüssiger, Filmbildner oder Entschäumer eingesetzt werden.

Das Bindemittel in der fertigen Beschichtung kann rein anorganisch aufgebaut sein.

Es ist auch möglich, dass das zumindest überwiegend anorganische Bindemittel (in der Beschichtung) durch organische Seitenketten modifiziert ist und zur Ausbildung von Hybridschichten, d. h. von Schichten mit einer gemischten anorganisch/organischen Bindemittelmatrix, in der Lage ist.

Die erfindungsgemäß bevorzugt eingesetzten Nanokomposite und deren Herstellung nach dem Sol-Gel-Verfahren sind im Stand der Technik bekannt, insbesondere aus DE 103 26 815 A1. Hierbei ist es bevorzugt, dass die nanoskaligen Feststoffteilchen mit einem Oberflächenmodifizierungsmittel mit einem Molekulargewicht von weniger als 1.500 oberflächenmodifiziert sind, insbesondere einem Oberflächenmodifizierungsmittel, das eine Anhydridgruppe, Säureamidgruppe, Aminogruppe, SiOH-Gruppe, hydrolysierbare Reste von Silanen und/oder eine β-Dicarbonylgruppe enthält.

Gemäß einer bevorzugten Ausführungsform ist das Bindemittel erhältlich nach dem Sol-Gel-Verfahren durch Umsetzen von einem oder mehreren Silanen der allgemeinen Formel (I):

RₓSiA₍₄₋ₓ₎ (I)

worin die Reste A gleich oder verschieden sind und Hydroxylgruppen oder hydrolysierbare Gruppen darstellen, die Reste R gleich oder verschieden sind und nichthydrolysierbare Gruppen darstellen und x den Wert 0, 1, 2 oder 3 hat, wobei bei mindestens 50% der Stoffmenge der Silane x ≥ 1 ist.

Gemäß einer anderen bevorzugten Ausführungsform ist das Bindemittel in Form eines oben beschriebenen Nanokomposits erhältlich nach dem Sol-Gel-Verfahren durch Umsetzen von einem oder mehreren Silanen der allgemeinen Formel (I) in Gegenwart der nanoskaligen Feststoffteilchen oder Vorstufen dieser nanoskaligen Feststoffteilchen, welche über das Sol-Gel-Verfahren in diese Feststoffteilchen umgewandelt werden,

RₓSiA₍₄₋ₓ₎ (I)

worin die Reste A gleich oder verschieden sind und Hydroxylgruppen oder hydrolysierbare Gruppen darstellen, die Reste R gleich oder verschieden sind und nichthydrolysierbare Gruppen darstellen und x den Wert 0, 1, 2 oder 3 hat, wobei bei mindestens 50% der Stoffmenge der Silane x ≥ 1 ist.

Sofern nur Silane der Formel (I) mit x=0 verwendet werden, gelangt man zu rein anorganischen Nanokompositen, ansonsten werden die bevorzugten organischanorganischen Nanokomposite erhalten, die in einer bevorzugten Ausführungsform in Gestalt der Beschichtungsmatrix durch eine Temperaturbehandlung in eine rein anorganische Beschichtung umgewandelt wird.

Geeignete Beispiele von Silanen der obigen Formel (I) sind ebenfalls in der DE 103 26 815 A1 aufgeführt. Insbesondere werden als SiO₂-Vorstufen alkoholische SiO₂-bildende Sole eingesetzt.

In einer weiteren Ausführungsform enthält das Bindemittel Böhmit-Nanoteilchen mit einer bevorzugten mittleren dispergierten Teilchengröße von 1-100 nm, weiter vorzugsweise 1-40 nm und insbesondere bevorzugt 2-20 nm. Es kann kommerziell erhältliches Böhmitpulver verwendet werden, beispielsweise wie von der Firma Sasol in den Qualitäten Disperal oder Dispal vertrieben, wobei vorzugsweise ein solches mit der Produktbezeichnung Disperal P2 eingesetzt wird.

Gemäß einer weiteren bevorzugten Ausführungsform umfasst das Bindemittel eine Mischung aus einem Böhmit-Sol und einem SiO₂-Sol, vorzugsweise eine Mischung aus einem Böhmit-Sol und einem SiO₂-Sol in einem Gewichtsverhältnis von etwa 1:1, bezogen auf den Feststoffgehalt der Sole.

Die Hartstoffpartikel bestehen vorzugsweise aus einem Material, welches unter den jeweiligen Einsatzbedingungen weder mit den Werkstoffen der zu fügenden Bauteile noch mit dem Umgebungsmedium chemisch reagiert.

Vorzugsweise sind die Hartstoffpartikel aus der Gruppe gewählt, bestehend aus Carbiden, Nitriden, Boriden, Diamant, SiO₂ und Al₂O₃, weiter vorzugsweise aus der Gruppe, bestehend aus Diamant, Siliciumcarbid und Borcarbid, insbesondere bevorzugt Siliciumcarbid und Diamant. Die Hartstoffpartikel weisen geeigneterweise Härten auf, die größer sind als die des Substrates und des späteren, zu fügenden Gegenkörpers. Daher weisen die geeigneten Hartstoffe in der Regel eine Härte größer 1.000 HV auf.

Die Größe der Hartstoffpartikel ist so zu wählen, dass die zu fügenden Oberflächen (Substrat und Gegenkörper) nicht derart beschädigt werden, dass unter Belastung Risse in die Materialien eingeleitet werden. Die Hartstoffpartikel haben vorzugsweise eine mittlere Partikelgröße d₅₀ (gemessen mittels Laserbeugung) von 1 - 100 µm, weiter vorzugsweise von 4 - 50 µm und insbesondere bevorzugt von 10 - 40 µm.

Um das Eindringen in beide Oberflächen zu verbessern und um eine Reibwerterhöhung zu erreichen, können Hartstoffe eingesetzt werden, die eine splittrige Kornform aufweisen, wie beispielsweise Siliciumcarbid und auch monokristalliner Diamant.

Es können auch Hartstoffpartikel eingesetzt werden, die in einer vergleichsweise engen Kornraffung erhältlich sind, so beispielsweise Diamant (polykristallin oder auch monokristallin).

Der Anteil der harten Partikel ist vorzugsweise so zu wählen, dass eine Flächenbelegung mit harten Partikeln von 1 - 50%, bevorzugt 5 - 50% und besonders bevorzugt 10 - 40% erhalten wird.

Als Substratwerkstoff für die erfindungsgemäßen Formkörper kommen metallische, aber auch keramische Werkstoffe, Glas, Kunststoff, Papier, Gewebe und Holz infrage. Als metallische Werkstoffe können alle üblichen Konstruktionswerkstoffe eingesetzt werden, beispielsweise Leichtmetallwerkstoffe, Stahllegierungen, Grauguß oder Sinterstahl. Mögliche Kombinationen von metallischen Fügepartnern sind beispielsweise 42CrMo4 mit St52, GGG700 mit 42CrMo4 und 42CrMo4 mit 42CrMo4, die für Welle-Nabe-Verbindungen eingesetzt werden können.

Gemäß einer weiteren Ausführungsform, bei welcher der erfindungsgemäße Formkörper als Sicherungselement für Schraubverbindungen eingesetzt wird, ist das Substrat des erfindungsgemäßen Formkörpers eine metallische Scheibe oder Folie, und die reibwerterhöhende Schicht ist auf beiden Seiten der Scheibe oder Folie aufgebracht, wobei vorzugsweise die Hartstoffpartikel 1-80%, weiter vorzugsweise 15-60% der jeweiligen Oberfläche der reibwerterhöhenden Schicht belegen.

Die erfindungsgemäße Beschichtungssuspension kann hergestellt werden durch Homogenisierung der Hartstoffpartikel und ggf. weiterer Komponenten, wie beispielsweise Füllstoffe, Dispergiermittel/Verflüssiger, Filmbildner, Entschäumer, Färbemittel oder Hilfsstoffe in dem lösemittelhaltigen Bindemittel.

Die ggf. zugesetzten Komponenten können organische Hilfsstoffe sein wie beispielsweise Polyvinylbutyral (PVB), Polyvinylalkohol (PVA), Polyethylenglykol (PEG) und Wachse.

Außerdem können Polymervorstufen oder teilpolymerisierte Polymere zur Ausbildung von Hybridschichten enthalten sein mit Bindungen der Art, dass kovalente und/oder teils ionisch-kovalente Bindungen mit oberflächenmodifizierten keramischen Partikeln oder metallorganischen Precursoren entstehen.

Eine bevorzugte wasserhaltige Beschichtungssuspension kann über ein Verfahren erhalten werden, das folgende Schritte umfasst:
i) Herstellen eines Böhmitsols in einem wässrigen Medium,
ii) Zugeben der restlichen Bestandteile unter gleichzeitiger Homogenisierung.

Zur Herstellung des Böhmitsols in Schritt i) können kommerziell erhältliche Böhmit-Pulverqualitäten mit Primärpartikelgrößen im Nanometerbereich eingesetzt werden, beispielsweise die oben erwähnten, kommerziell erhältlichen Böhmitpulver der Firma Sasol. Die Böhmitpulver werden in ein wässriges Medium, vorzugsweise Wasser, eingerührt, das weiter vorzugsweise vorerwärmt wurde, vorzugsweise auf Temperaturen über 80°C. Alternativ kann die Herstellung eines Böhmitsols über Alkoxidrouten gemäß dem Yoldas-Prozess oder über die Verwendung von Aluminiumsalzen und Zugabe einer Base erfolgen. Nach der Homogenisierung wird die Dispersion üblicherweise durch Säurezugabe peptisiert und in ein Sol überführt. Geeigneterweise können Feststoffkonzentrationen im Sol von bis zu 20 Gew.-% Böhmit, vorzugsweise 5-12 Gew.-%, eingestellt werden. Zur Einstellung der resultierenden Schichteigenschaften und maximalen Schichtdicken der Bindematrix kann das Böhmitsol mit weiteren Komponenten versetzt werden.

Das in Schritt i) hergestellte Böhmitsol dient als Dispersionsmittel, in das die restlichen Bestandteile der Beschichtungssuspension durch portionierte Zugabe der Komponenten bei gleichzeitiger Homogenisierung eingebracht werden (Schritt ii)). Die Homogenisierung kann mittels üblichen Rührvorrichtungen, wie einem Blattrührer erfolgen.

Als besonders vorteilhaft hat sich eine Mischung des Böhmitsols mit einem SiO₂-Sol erwiesen (beispielsweise Dynasylan® SIVO 110; Fa. Evonik Degussa), das eine bei niedrigen Temperaturen härtende Sol-Gel-Beschichtung ausbildet. Die jeweils einzeln applizierten Sole erlauben Schichtdicken von ca. 0,5 oder 2 µm, bevor es zu Abplatzungen kommt. Mit einem Gemisch im Verhältnis von etwa 1:1 eines Böhmitsols mit einem SiO₂-Sol können erfindungsgemäß defektfreie Schichtdicken von ca. 5-8 µm erzielt werden.

Die maximale Schichtdicke von Sol-Gel-Systemen kann durch die Verwendung von Füllstoffen, bevorzugt anorganischen Füllstoffen erhöht werden, bei denen der mittlere Partikeldurchmesser größer als 100 nm ist und kleiner als es dem Fünffachen der Schichtdicke entspricht. Eine Erhöhung der Schichtdicke ist insbesondere für größere Hartstoffpartikel sinnvoll.

Die erfindungsgemäßen Formkörper sind erhältlich durch ein Verfahren, das die folgenden Schritte umfasst:
a) Vorsehen eines Substrats,
b) Auftragen einer wie oben beschriebenen, erfindungsgemäßen Suspension auf mindestens einen Teil der Oberfläche des Substrats,
c) Trocknen der so erhaltenen Beschichtung, und
d) gegebenenfalls Temperaturbehandlung der in Schritt c) erhaltenen Beschichtung, um diese zu härten, und/oder mechanische Behandlung der so erhaltenen Beschichtung.

Zur besseren Benetzung der Substratoberfläche kann das Substrat mit einem Primer vorbehandelt werden, beispielsweise durch Aufsprühen oder Einreiben des Binders oder des verdünnten Binders (ohne Hartstoffpartikel), wobei eine Schichtdicke von deutlich unterhalb 1 µm erzielt wird.

Das Auftragen gemäß Schritt b) erfolgt vorzugsweise in einem Schritt und kann durch Beschichtungsmethoden wie Sprühen, Drucken (beispielsweise Tampondruck), Schleudern oder Fluten erfolgen.

Die rheologischen Eigenschaften der Beschichtungssuspension müssen dazu dem jeweiligen Verfahren durch Zusatz geeigneter Zusatzstoffe angepasst werden. Das jeweils ideale Verfahren hängt von den Randbedingungen ab, die zum großen Teil durch die Geometrie der Beschichtungsfläche und deren Zugänglichkeit bestimmt werden. Bei Sprühprozessen ist darüber hinaus darauf zu achten, dass Overspray durch ein geeignetes Maskierverfahren vermieden wird. Um eine möglichst homogene Schichtdickenverteilung sicherzustellen, ist ein Sprühprozess mit einer vergleichsweise niedrig viskosen Beschichtungssuspension bevorzugt. Dadurch wird eine ggf. vorhandene, ungleichmäßige Schichtdickenverteilung automatisch ausgeglichen, wobei in der Regel die Partikel durch eine gute Benetzung hervorragend in die Matrix eingebunden werden, was ein ungewolltes Ausbrechen der Partikel verhindert. Diese Methoden sind deshalb bevorzugt, weil damit die Ausbildung einer Partikelmonolage und die Ausbildung einer geeigneten Matrixschichtdicke, bei der die Partikel ausreichend aus der Matrix herausragen, sichergestellt sind. Bei Prozessen wie dem Eintauchen des Substrates in die Beschichtungssuspension oder dem zweistufigen Schichtaufbau bestehend aus der primären Aufbringung der Matrix und der sekundären Einbringung der Partikel z. B. durch Aufrieseln, können diese beiden wichtigen Punkte (Monolage von Hartstoffpartikeln und homogene, reproduzierbare Einstellung der Matrixschichtdicke) nicht sichergestellt werden. Diese zuletzt genannten Verfahren sind also zwar auch möglich, aber nicht bevorzugt.

Die Schichten werden vorzugsweise durch Sprühen aufgebracht. Die Beschichtung kann beispielsweise manuell mit einer HVLP Sprühpistole aufgetragen werden (z.B. mit 1mm Düsendurchmesser). Bevorzugt ist eine automatisierte Applikation mit Lackierpistolen z.B. durch Roboter zur Einstellung immer gleicher Applikationsabstände, Auftragsgeschwindigkeiten, und Überdeckungsgrade. Zusätzlich können bei der Sprühapplikation Strahlaufweitung, Sprühdruck, Fördergeschwindigkeit der Medien usw. eingestellt werden.

Die Partikeldispersion wird bei der Sprühapplikation im Vorratsbehälter derart zirkuliert, dass die Partikelkonzentration pro Volumeneinheit zeitlich konstant bleibt. Damit lässt sich sicherstellen, dass bei optimalem Sprühablauf stets eine gleichmäßige Oberflächenbeladung mit Partikeln stattfindet.

Es ist aber auch denkbar, eine mit einer geeigneten Beschichtungsdispersion befüllte Sprühdose unter Verwendung eines Treibmittels oder Druckgases zu verwenden. Dies ermöglicht auch einen einfachen mobilen Einsatz und so ggf. auch eine selbständige Reparatur von Schichten auf großen Bauteilen durch den Anwender.

Die Trocknung der noch feuchten Beschichtung in Schritt c) kann bei Raumtemperatur, vorzugsweise jedoch bei Temperaturen von 30 bis 80 °C erfolgen.

Die gegebenenfalls nachgeschalteten Prozesse in Schritt d) können eine mechanische Behandlung und/oder ein Härten durch eine Temperaturbehandlung beinhalten, wobei es auch möglich ist, nur eine Temperaturbehandlung oder eine mechanische Behandlung durchzuführen und, falls beides durchgeführt wird, auch die Reihenfolge dieser beiden Schritte umgekehrt werden kann. Die mechanische Behandlung kann beispielsweise eine Verdichtung oder Teilverpressung der Partikel in das Substrat sein. Eine Temperaturbehandlung zum Aushärten in Schritt d) erfolgt je nach System und Substrat bei Temperaturen von 100°C bis 800°C.

Die beschriebenen Sol-Gel-Schichtsysteme haben die herausragende Eigenschaft, sehr dünne und homogene Schichten auszubilden, was zu einer sehr gleichmäßigen Schichtdickenverteilung auf dem Substrat führt.

Durch Einbau von Nanopartikeln lässt sich die Abriebbeständigkeit verbessern. Weiterhin kann die Beschichtung noch Zusätze von farbigen und/oder fluoreszierenden Partikeln enthalten. Dadurch kann beispielsweise die aufgebrachte Schichtdicke leicht optisch überprüft werden und das beschichtete Bauteil erhält ein weiteres Erkennungs- bzw. Antipirateriemerkmal. Eine weitere Möglichkeit besteht darin, durch den Einbau von kontrastgebenden Partikeln eine Prüfung auf Schichtfehler in einem Röntgendurchstrahlungsverfahren zu ermöglichen.

Die Hartstoffpartikel sollten idealerweise eine Monolage ausbilden. Die Hartstoffpartikel müssen mindestens teilweise aus der Bindemittelmatrix herausragen, um eine reibwerterhöhende Wirkung erzielen zu können. Der mittlere Partikeldurchmesser sollte größer sein als die mittlere Matrixschichtdicke. Bevorzugt sollte der mittlere Hartstoffpartikeldurchmesser mindestens das Doppelte der mittleren Matrixschichtdicke betragen. Der mittlere Hartstoffpartikeldurchmesser kann anwendungsabhängig auch das Dreifache der mittleren Matrisschichtdicke betragen, beispielsweise in dem Fall, wenn wenigstens einer der Fügepartner aus einem weicheren Werkstoff besteht. Bei Fügepartnern mit größeren Oberflächenrauhigkeiten werden vorzugsweise größere Partikel eingesetzt.

Die erfindungsgemäße Beschichtungssuspension kann als Beschichtung auf einem der beiden Fügepartner aufgebracht werden, es kann aber auch eine beidseitig beschichtete dünne Folie oder dickere Scheibe als Verbindungselement zwischen beide Fügepartner eingesetzt werden. Ein solches Verbindungselement dient zur reibungserhöhenden kraftschlüssigen Verbindung von Bauteilen. Die Folie kann beispielsweise aus Metall, Kunststoff, Papier oder Gewebe bestehen, die dickere Scheibe aus Metall, Kunststoff, Keramik, Glas oder Holz. Für den Fall, dass eine beschichtete Folie eingesetzt wird, kann die Dicke der Folie abhängig von der Anwendung gewählt werden und beispielsweise 0,1 mm betragen.

Die beschichteten Formkörper werden in Press- oder Klemmverbindungen eingesetzt. Zwischen beschichteten und unbeschichteten Formkörpern kommt es beim Verspannen durch die erfindungsgemäße Beschichtung zum Mikroformschluß, der Haftreibwert wird erhöht. Beispiele für Press- oder Klemmverbindungen sind Schrumpfverbindungen, wie Welle/Nabe-Verbindungen auf der Haupt- und Generatorwelle von Windkraftanlagen, Flanschverbindungen im Motorenbereich, beispielsweise Anbauten von Nebenaggregaten am Kurbelgehäuse, Flansche von Getriebegehäusen, vor allem aus Aluminium, sowie Stirnpressverbindungen von Kettenrädern.

In einer weiteren Anwendung kann die erfindungsgemäße Beschichtung als mechanische Schraubensicherung eingesetzt werden. Hierbei kann ein Sicherungselement als Zwischenlage zwischen Schraubenkopf und Auflagewerkstoff und/oder zwischen Mutter und Auflagewerkstoff eingesetzt werden, wobei das Sicherungselement beidseitig mit der erfindungsgemäßen Beschichtung versehen ist. Als Sicherungselement kann beispielsweise eine beidseitig beschichtete dicke Scheibe aus einem metallischen Werkstoff oder auch eine beidseitig beschichtete dünne Metallfolie eingesetzt werden. Die erfindungsgemäße Beschichtung kann auch direkt auf Schraubenunterköpfe, den Auflagewerkstoff oder die Mutter aufgebracht werden. Auch eine Beschichtung des Schraubengewindes ist möglich. Im Fall einer solchen Beschichtung belegen die Hartstoffpartikel vorzugsweise 1-80%, weiter vorzugsweise 15-60% der jeweiligen Oberfläche der reibwerterhöhenden Schichten. Die Sicherungsscheibe bzw. die Beschichtung des Schraubenunterkopfs, des Auflagewerkstoffs, der Mutter oder des Gewindes hat die Funktion einer Losdrehsicherung bzw. einer Verliersicherung (Bei Versuchen auf dem Rüttelprüfstand nach Junker gilt folgende Definition: Losdrehsicherung: nach 1000 Lastwechseln muß noch eine Vorspannkraft von mindestens 80% des Startwertes vorhanden sein, bei einer Verliersicherung zwischen 20 und 80%). Beim Verschrauben kommt es durch die erfindungsgemäße Beschichtung zwischen den entsprechenden Oberflächen zur Ausbildung eines Mikroformschlusses, der im Vergleich zu mechanischen Schraubensicherungen aus dem Stand der Technik hinsichtlich der Schraubensicherung mindestens zu einer gleichwertigen Sicherungswirkung (Losdrehsicherung) führt, während die Nachteile durch Verletzungen der Gegenfläche nicht gegeben sind. Der Mikroformschluss erlaubt darüber hinaus kein zusätzliches Setzen der Verbindung. Die Temperaturbeständigkeit der Schraubensicherung ist ausgezeichnet und der Beständigkeit chemischer Schraubensicherungen weit überlegen.

### Beispiele und Vergleichsbeispiele

Die nachfolgenden Beispiele und Vergleichsbeispiele dienen zur Erläuterung der Erfindung.

### Beispiel 1: Beschichtung mit ethanolischem SiO₂-Sol-Gel-Binder und Hartstoff SiC

87 g BaSO₄ (Sachtoperse HU-N der Fa. Sachtleben) werden in 783 g Binder Inosil SB (Fa. Inomat GmbH) mit einem Rühraggregat eingearbeitet und anschließend mit einem Ultra Turrax (Fa. IKA) 10 Minuten dispergiert.

130 g SiC-Pulver mit einer mittleren Korngröße von d₅₀ = 12 µm und einem d₉₇-Wert von 22 µm werden mit einem Dissolver in die Vormischung aus Binder und BaSO₄ eine Stunde eingearbeitet. Der Binder besteht aus einem SiO₂-Sol-Gel-Nanokomposit mit SiO₂-Nanopartikeln, die mit hydrolisierbaren Resten von Silanen oberflächenmodifiziert wurden. Die Suspension wird mit einer HVLP Lackierpistole appliziert. Nach dem Trocknen der Beschichtung bei Raumtemperatur wird die Schicht bei 350°C für 30 min eingebrannt. Nach dem Einbrennen beträgt die mittlere Matrixschichtdicke ca. 5 µm und die Flächenbelegung mit SiC-Partikeln, lichtmikroskopisch bestimmt, ca. 20 %.

### Beispiel 2: Beschichtung mit Binder Böhmit-SiO₂-Sol und Hartstoff SiC

500 ml Wasser werden auf 85-95°C aufgeheizt. Es folgt unter starkem Rühren die Zugabe von 34 g nanoskaligem Böhmitpulver. Die Homogenisierung wird unter starkem Rühren innerhalb von 10 Minuten durchgeführt. Die Suspension wird bei Prozesstemperatur mit 6 ml konzentrierter Salpetersäure peptisiert. Ein Alterungsschritt bei erhöhter Temperatur wird nicht durchgeführt. Während der Herstellung konzentriert sich das Sol auf. Das Sol wird durch Zugabe von Wasser auf einen Böhmitfeststoffgehalt von 7,1 Gew.-% (entsprechend einem Gehalt von 8,3 g hydratisiertem Böhmitpulver) verdünnt. In 500g des kalten Böhmitsols werden 500g Dynasylan Sivo 110 (Evonik Degussa) eingerührt.

80 g SiC-Pulver mit einer mittleren Korngröße von d₅₀ = 12 µm und einem d₉₇-Wert von 22 µm werden mit einem Dissolver in 920 g Vormischung aus Böhmitsol und Dynasylan Sivo 110 eine Stunde eingearbeitet.

Die Suspension wird mit einer HVLP Lackierpistole appliziert. Nach dem Trocknen der Beschichtung bei Raumtemperatur wird die Schicht bei 200°C für 30 min ausgehärtet. Nach dem Härten beträgt die mittlere Matrixschichtdicke ca. 5 µm und die Flächenbelegung mit SiC-Partikeln, lichtmikroskopisch bestimmt, ca. 22 %.

### Beispiel 3: Beschichtung mit ethanolischem SiO₂-Sol-Gel-Binder und Hartstoff SiC

40g HDK N20 (Fumed Silica, Wacker-Chemie AG) werden in 830 g Binder Inosil SB (Fa. Inomat GmbH) mit einem Rühraggregat eingearbeitet und anschließend mit einem Ultra-Turrax (Fa. IKA) 60 Minuten dispergiert.

130 g SiC-Pulver mit einer mittleren Korngröße von d₅₀ = 35 µm und einem d₉₇-Wert von 60 µm werden mit einem Dissolver in die Vormischung aus Binder und HDK N20 eine Stunde eingearbeitet. Der Binder besteht aus einem SiO₂-Sol-Gel-Nanokomposit mit SiO₂-Nanopartikeln, die mit hydrolisierbaren Resten von Silanen oberflächenmodifiziert wurden. Die Suspension wird mit einer HVLP Lackierpistole appliziert. Nach dem Trocknen der Beschichtung bei Raumtemperatur wird die Schicht bei 100°C für 30 min temperiert. Die mittlere Matrixschichtdicke beträgt ca. 8 µm und die Flächenbelegung mit SiC-Partikeln, lichtmikroskopisch bestimmt, ca. 20 %.

### Vergleichsbeispiel 1: Beschichtung mit PVA-Binder und Hartstoff SiC

In 770g Wasser werden 157g PVA (Celvol 513, Celanese) mit einem Rühraggregat eine Stunde gelöst. Mit einem Dissolver werden 73g SiC Pulver mit einer mittleren Korngröße von d₅₀ = 12 µm und einem d₉₇-Wert von 22 µm in der PVA-Lösung dispergiert.

Die Suspension wird mit einer HVLP Lackierpistole appliziert. Nach dem Trocknen der Beschichtung bei Raumtemperatur beträgt die mittlere Matrixschichtdicke ca. 6 µm und die Flächenbelegung mit SiC-Partikeln, lichtmikroskopisch bestimmt, ca. 18 %.

### Vergleichsbeispiel 2: Beschichtung mit PVB-Binder und Hartstoff SiC

In 800g Ethanol werden 120g PVB (Pioloform BM 18, Wacker-Chemie) mit einem Rühraggregat eine Stunde gelöst. Mit einem Dissolver werden 80g SiC Pulver mit einer mittleren Korngröße von d₅₀ = 12 µm und einem d₉₇-Wert von 22 µm in der PVB-Lösung dispergiert.

Die Suspension wird mit einer HVLP Lackierpistole appliziert. Nach dem Trocknen der Beschichtung bei Raumtemperatur beträgt die mittlere Matrixschichtdicke ca. 6 µm und die Flächenbelegung mit SiC-Partikeln, lichtmikroskopisch bestimmt, ca. 20 %.

### Beispiele 4 bis 15 und Vergleichsbeispiele 3 bis 10:

### Haftreibwertermittlung an den beschichteten Proben

Die Haftreibwerte wurden auf einem manuellen Torsionsprüfstand mit einer automatischen Messung des Drehwinkels, der Vorspannkraft und des aufgebrachten Drehmoments ermittelt. Dazu wurden Prüfkörper aus den jeweiligen Materialien gefertigt. Es wurden scheibenförmige Prüfkörper eingesetzt mit einer erhabenen, ringförmigen Kontaktfläche, deren Innendurchmesser 20 mm und deren Außendurchmesser 38 mm betrug. Die Oberflächenrauigkeit betrug für alle Substrate Rₐ = 1,6 µm. Die haftreibwerterhöhenden Sol-Gel-Schichten wurden auf jeweils einen der Prüfkörper appliziert. Die Prüfkörper wurden gegeneinander mit einer Zentralschraube verspannt. Die Vorspannkraft wurde mittels einer Kraftmessdose aufgezeichnet. Der Aufbau wurde jeweils mit einer Flächenpressung von 50 MPa belastet. Alle Parameter wurden über ein Kontrollgerät gesammelt und an eine Auswertesoftware übermittelt. Einer der Prüfkörper wurde fest verankert, während der zweite Prüfkörper über einen Hebel manuell mit einem Drehmoment beaufschlagt wurde. Das Drehmoment wurde kontinuierlich aufgezeichnet und bis zum Rutschen der Verbindung erhöht. Das Rutschen wurde durch Aufzeichnung des Verdrehwinkels dokumentiert. Der Haftreibwert wird aus dem mittleren Reibradius und den bei einem festgelegten Verdrehwinkel von 0,5° gemessenen Werten von Drehmoment und Vorspannkraft ermittelt. Jede Paarung wurde jeweils in einer statistisch belastbaren Anzahl gemessen. Um die prozentuale Reibwerterhöhung zu ermitteln, wurde jeweils der Reibwert der reinen Materialpaarung ebenfalls auf dem oben beschriebenen Weg ermittelt. Die Oberflächen wurden dazu mit Ethanol vorgereinigt und mit Aceton endgereinigt, um eine Verfälschung der Messergebnisse durch Fremdstoffe in der Kontaktfläche auszuschließen.

Die Härtewerte der Werkstoffe der für die Versuche eingesetzten Prüfkörper sind: AlMgSi1: 96 HV 1; 16MnCr5 einsatzgehärtet: 700 HV 1; CK45: 313 HV 1; Sint-D30: 165 HV 1; GG25: 308 HV 1.

Vor den Beschichtungsversuchen wurden die Oberflächen mit Ethanol und Aceton gereinigt. Teilweise wurde die Oberfläche auch mit einem beschichtungsdispersions-getränkten Tuch abgewischt, was die Schichthaftung ebenfalls verbessert.

Tabelle 1 zeigt die relativen Verbesserungen des Haftreibwerts zwischen verschiedenen Materialpaarungen, welche durch die Aufbringung einer geeigneten, erfindungsgemäßen Schicht erzielt werden können.

**Tabelle 1: Beispiele und Vergleichsbeispiele für die prozentuale Veränderung von Haftreibwerten bei unterschiedlichen Materialpaarungen durch die Aufbringung einer Funktionsschicht. Alle Angaben beziehen sich auf Flächenpressungen von 50 MPa in Torsionsversuchen. Die prozentuale Reibwerterhöhung ist bezogen auf unbeschichtete Materialpaarungen.**

| Beispiel Nr. | Materialpaarung (beschichtet wurde jeweils der zuerstgenannte Partner) | Sol-Gel-Bindematrix | Partikeltyp und -größe | Prozentuale Reibwerterhöhung [%] |
|---|---|---|---|---|
| E4 | GG25-AlMgSi 1 | wie Beispiel 2 | SiC (12 *µ*m) | 557 |
| E5 | 16MnCr5-16MnCr5 | wie Beispiel 2 | SiC (12 *µ*m) | 314 |
| E6 | 16MnCr5-16MnCr5 | wie Beispiel 1 | SiC (12 *µ*m) | 114 |
| V3 | 16MnCr5-16MnCr5 | PVB | SiC (12 *µ*m) | 7 |
| V4 | 16MnCr5-16MnCr5 | PVA | SiC (12 *µ*m) | 29 |
| E7 | ABS-AlMgSi1 | wie Beispiel 2 | SiC (12 *µ*m) | 72 |
| E8 | AlMgSi1-AlMgSi1 | wie Beispiel 2 | SiC (12 *µ*m) | 609 |
| E9 | AlMgSi1-AlMgSi1 | wie Beispiel 1 | SiC (12 *µ*m) | 400 |
| V5 | AlMgSi1-AlMgSi1 | PVB | SiC (12 *µ*m) | 91 |
| V6 | AlMgSi1-AlMgSi1 | PVA | SiC (12 *µ*m) | 127 |
| E10 | CK45-GG25 | wie Beispiel 2 | SiC (12 *µ*m) | 307 |
| E11 | CK45-GG25 | wie Beispiel 1 | SiC (12 *µ*m) | 136 |
| V7 | CK45-GG25 | PVA | SiC (12 *µ*m) | 14 |
| V8 | CK45-GG25 | PVB | SiC (12 *µ*m) | 14 |
| E12 | SintD30-SintD30 | wie Beispiel 2 | SiC (12 *µ*m) | 347 |
| E13 | PA6.6-AlMgSi1 | wie Beispiel 2 | SiC (12 *µ*m) | 220 |
| V9 | AlMgSi1-AlMgSi1 | Chemisch Nickel | Diamant (10 *µ*m) | 450 |
| V10 | SintD30-SintD30 | Phenolharz | SiC (12 *µ*m) | 193 |
| E14 | SintD30-SintD30 | wie Beispiel 1 | SiC (12 *µ*m) | 265 |
| E15 | GG25-AlMgSi1 | Beispiel 3 | SiC (35 *µ*m) | 529 |

| | | | | |
|---|---|---|---|---|
| Beispiele "E" sind erfindungsgemäß, Beispiele "V" sind Vergleichsbeispiele. V10 ist ein Vergleichsbeispiel gemäß WO 2008/095216. Bei dem als ABS bezeichneten Werkstoff handelt es sich um Acrylnitril-Butadien-Styrol-Copolymerisat, PA 6.6 steht für Polyamid 6.6. | | | | |

### Beispiel 16: Schraubensicherung

Es wurden Edelstahlscheiben einer Dicke von 2 mm aus dem Werkstoff 1.4301 bzw. 1.4310 der Größe M10 nach DIN ISO 7089 mit der Beschichtung gemäß Beispiel 2 versehen, wobei anstelle von SiC hier Diamant einer mittleren Partikelgröße von 25 µm eingesetzt wurde. Die Schichten wurden bei 180°C ausgehärtet, die mittlere Matrixschichtdicke betrug ca. 8 µm.

Die Eignung als Losdrehsicherung wurde auf einem Rüttelprüfstand (Typ Junker) nach DIN 65151 mit einer dynamisch wechselnden Querbelastung bei einer Frequenz von 12,5 Hz nachgewiesen. Dazu wurde die Scheibe mit einer schwarzen M10-Schraube nach DIN EN ISO 4017 der Festigkeitsklasse 10.9 nach ISO 898-1 bis zum Erreichen einer Vorspannkraft von 40kN angezogen. Die Auflagefläche bestand aus dem Werkstoff 16MnCr5 und wies eine Rauigkeit von Rₐ = 1 auf. Das Klemmlängenverhältnis betrug 1,5. Nach 1000 Lastwechseln betrug die mittlere Vorspannkraft 90 % des Startwertes. Damit erfüllt die Scheibe das Kriterium für eine Losdrehsicherung, nachdem nach 1000 Lastwechseln noch eine Vorspannkraft von mindestens 80% des Startwertes vorhanden sein muss.

## Patentansprüche

1. Suspension zur Herstellung einer reibwerterhöhenden Schicht auf einem Substrat, umfassend ein flüssiges Suspensionsmedium, ein überwiegend anorganisches, SiO₂-basiertes Bindemittel oder dessen Vorläuferverbindungen und suspendierte Hartstoffpartikel, gewählt aus der Gruppe, bestehend aus Diamant, Siliciumcarbid und Borcarbid.

2. Suspension nach Anspruch 1, wobei das Bindemittel ein Nanokomposit aus siliciumorganischen SiO₂-Vorstufen aus der Herstellung über ein Sol-Gel-Verfahren, enthaltend nanoskalige Feststoffteilchen, ist.

3. Suspension nach Anspruch 2, wobei die nanoskaligen Feststoffteilchen Metalloxidteilchen, vorzugsweise ausgewählt aus SiO₂, TiO₂, ZrO₂, Al₂O₃, AlOOH, Y₂O₃ und CeO₂, c-BN, BaSO₄, Mischungen dieser oder Vorstufen dieser nanoskaligen Feststoffteilchen sind, welche über einen Sol-Gel-Prozess in diese Feststoffteilchen umgewandelt werden, weiter vorzugsweise SiO₂-Feststoffteilchen.

4. Suspension nach Anspruch 1, wobei das Bindemittel erhältlich ist nach dem Sol-Gel-Verfahren durch Umsetzen von einem oder mehreren Silanen der allgemeinen Formel (I):
RₓSiA₍₄₋ₓ₎ (I)
worin die Reste A gleich oder verschieden sind und Hydroxylgruppen oder hydrolysierbare Gruppen darstellen, die Reste R gleich oder verschieden sind und nichthydrolysierbare Gruppen darstellen und x den Wert 0, 1, 2 oder 3 hat, wobei bei mindestens 50% der Stoffmenge der Silane x ≥ 1 ist.

5. Suspension nach Anspruch 2 und/oder 3, wobei das Bindemittel erhältlich ist nach dem Sol-Gel-Verfahren durch Umsetzen von einem oder mehreren Silanen der allgemeinen Formel (I) in Gegenwart der nanoskaligen Feststoffteilchen oder Vorstufen dieser nanoskaligen Feststoffteilchen, welche über das Sol-Gel-Verfahren in diese Feststoffteilchen umgewandelt werden,
RₓSiA₍₄₋ₓ₎ (I)
worin die Reste A gleich oder verschieden sind und Hydroxylgruppen oder hydrolysierbare Gruppen darstellen, die Reste R gleich oder verschieden sind und nichthydrolysierbare Gruppen darstellen und x den Wert 0, 1, 2 oder 3 hat, wobei bei mindestens 50% der Stoffmenge der Silane x ≥ 1 ist.

6. Suspension nach Anspruch 1, wobei das Bindemittel Böhmit-Nanoteilchen umfasst, vorzugsweise mit einer mittleren dispergierten Teilchengrösse von 1-100 nm, weiter vorzugsweise 1-40 nm, insbesondere bevorzugt 2-20 nm.

7. Suspension nach Anspruch 6, wobei das Bindemittel eine Mischung aus einem Böhmit-Sol und einem SiO₂-Sol umfasst, vorzugsweise eine Mischung aus einem Böhmit-Sol und einem SiO₂-Sol in einem Gewichtsverhältnis von etwa 1:1, bezogen auf den Feststoffgehalt der Sole.

8. Suspension nach mindestens einem der vorangehenden Ansprüche, wobei das flüssige Suspensionsmedium gewählt ist aus Wasser, wasserhaltigen Lösungsmitteln, alkoholischen Lösungsmitteln und Mischungen hiervon.

9. Suspension nach mindestens einem der vorangehenden Ansprüche, wobei die Hartstoffpartikel aus der Gruppe gewählt sind, bestehend aus Siliciumcarbid und Diamant.

10. Suspension nach mindestens einem der vorangehenden Ansprüche, wobei die Hartstoffpartikel eine mittlere Partikelgrösse d₅₀ von 1-100 µm, vorzugsweise 4-50 µm, weiter vorzugsweise 10 -40 µm, aufweisen.

11. Formkörper, umfassend ein Substrat und eine auf mindestens einen Teil der Oberfläche des Substrats aufgebrachte, reibwerterhöhende Schicht, die eine überwiegend anorganische, SiO₂-basierte Bindemittelmatrix und darin eingelagerte Hartstoffpartikel umfasst, wobei die Dicke der Bindemittelmatrix geringer ist als die mittlere Partikelgrösse der Hartstoffpartikel, so dass die Hartstoffpartikel aus der Bindemittelmatrix herausragen, und wobei die reibwerterhöhende Schicht aus einer Suspension gemäss mindestens einem der Ansprüche 1-10 gebildet wurde.

12. Formkörper nach Anspruch 11, wobei das Substrat aus einem metallischen oder keramischen Werkstoff, Glas, Kunststoff, Papier, Gewebe oder Holz besteht.

13. Formkörper nach Anspruch 11 und/oder 12, wobei die Hartstoffpartikel 1-50%, vorzugsweise 5-50%, weiter vorzugsweise 10-40% der Oberfläche der reibwerterhöhenden Schicht belegen.

14. Formkörper nach Anspruch 13, wobei das Substrat eine metallische Scheibe oder Folie ist und die reibwerterhöhende Schicht auf beiden Seiten der Scheibe oder Folie aufgebracht ist.

15. Formkörper nach Anspruch 11 und/oder 12, wobei das Substrat eine metallische Scheibe oder Folie ist und die reibwerterhöhende Schicht auf beiden Seiten der Scheibe oder Folie aufgebracht ist, und wobei vorzugsweise die Hartstoffpartikel 1-80%, weiter vorzugsweise 15-60% der jeweiligen Oberfläche der reibwerterhöhenden Schichten belegen.

16. Verfahren zur Herstellung eines Formkörpers nach mindestens einem der Ansprüche 11-15, umfassend die Schritte
a) Vorsehen eines Substrats,
b) Auftragen einer Suspension gemäss mindestens einem der Ansprüche 1-10 auf mindestens einen Teil der Oberfläche des Substrats,
c) Trocknen der so erhaltenen Beschichtung, und
d) gegebenenfalls Temperaturbehandlung der in Schritt c) erhaltenen Beschichtung, um diese zu härten, und/oder mechanische Behandlung der so erhaltenen Beschichtung.

17. Verfahren nach Anspruch 16, wobei die Temperaturbehandlung zum Härten der Beschichtung in Schritt d) bei Temperaturen von 100-800°C durchgeführt wird.

18. Verfahren nach Anspruch 16 und/oder 17, wobei die mechanische Behandlung in Schritt d) dazu dient, die Beschichtung zu verdichten oder die Hartstoffpartikel teilweise in das Substrat zu verpressen.

19. Verwendung eines Formkörpers gemäß mindestens einem der Ansprüche 11-13 zur Herstellung von Press- oder Klemmverbindungen in einem Verbund mit einem wahlweise ebenfalls eine reibwerterhöhende Schicht aufweisenden Formkörper, vorzugsweise zur Herstellung von Schrumpfverbindungen wie Welle-Nabe-Verbindungen und Flanschverbindungen.

20. Verwendung eines Formkörpers nach Anspruch 14 als Verbindungselement zur reibungserhöhenden, kraftschlüssigen Verbindung von Bauteilen.

21. Verwendung eines Formkörpers nach Anspruch 15 als Sicherungselement für Schraubverbindungen, das als Zwischenlage zwischen Schraubenkopf und Auflagewerkstoff und/oder zwischen Mutter und Auflagewerkstoff eingesetzt wird.

22. Verwendung eines Formkörpers nach Anspruch 11 und/oder 12 zur Sicherung von Schraubverbindungen, wobei die reibwerterhöhende Schicht direkt unter den Schraubenkopf und/oder auf die Mutter und/oder auf den Auflagewerkstoff und/oder direkt auf das Schraubengewinde aufgebracht wird, und wobei vorzugsweise die Hartstoffpartikel 1-80%, weiter vorzugsweise 15-60% der jeweiligen Oberfläche der reibwerterhöhenden Schichten belegen.

## Claims

1. A suspension for producing a friction-increasing layer on a substrate, which comprises a liquid suspension medium, a predominantly inorganic SiO₂-based binder or precursor compounds thereof and suspended hard material particles, selected from the group consisting of diamond, silicon carbide and boron carbide.

2. The suspension as claimed in claim 1, wherein the binder is a nanocomposite composed of silicon-organic SiO₂ precursors from production via a sol-gel process containing nanosize solid particles.

3. The suspension as claimed in claim 2, wherein the nanosize solid particles are metal oxide particles which are preferably selected from among SiO₂, TiO₂, ZrO₂, Al₂O₃, AlOOH, Y₂O₃ and CeO₂, c-BN, BaSO₄, mixtures thereof or precursors of these nanosize solid particles which are converted via a sol-gel process into these solid particles, more preferably SiO₂ solid particles.

4. The suspension as claimed in claim 1, wherein the binder can be obtained by the sol-gel process by reaction of one or more silanes of the general formula (I):
RₓSiA₍₄₋ₓ₎ (I)
where the radicals A are identical or different and are hydroxyl groups or hydrolyzable groups, the radicals R are identical or different and are nonhydrolyzable groups and x is 0, 1, 2 or 3, with x being ≥ 1 for at least 50% of the molar amount of the silanes.

5. The suspension as claimed in claim 2 and/or 3, wherein the binder can be obtained by the sol-gel process by reaction of one or more silanes of the general formula (I) in the presence of the nanosize solid particles or precursors of these nanosize solid particles which are converted by the sol-gel process into these solid particles,
RₓSiA₍₄₋ₓ₎ (I)
where the radicals A are identical or different and are hydroxyl groups or hydrolyzable groups, the radicals R are identical or different and are nonhydrolyzable groups and x is 0, 1, 2 or 3, with x being ≥ 1 for at least 50% of the molar amount of the silanes.

6. The suspension as claimed in claim 1, wherein the binder comprises boehmite nanoparticles, preferably having an average dispersed particle size of 1-100 nm, more preferably 1-40 nm, particularly preferably 2-20 nm.

7. The suspension as claimed in claim 6, wherein the binder comprises a mixture of a boehmite sol and an SiO₂ sol, preferably a mixture of a boehmite sol and an SiO₂ sol in a weight ratio of about 1:1, based on the solids content of the sols.

8. The suspension as claimed in at least one of the preceding claims, wherein the liquid suspension medium is selected from among water, water-containing solvents, alcoholic solvents and mixtures thereof.

9. The suspension as claimed in at least one of the preceding claims, wherein the hard material particles are selected from the group consisting of silicon carbide and diamond.

10. The suspension as claimed in at least one of the preceding claims, wherein the hard material particles have an average particle size d₅₀ of 1-100 µm, preferably 4-50 µm, more preferably 10-40 µm.

11. A shaped body comprising a substrate and a friction-increasing layer which has been applied to at least part of the surface of the substrate and comprises a predominantly inorganic SiO₂-based binder matrix and hard material particles embedded therein, where the thickness of the binder matrix is less than the average particle size of the hard material particles so that the hard material particles project from the binder matrix and where the friction-increasing layer has been formed from a suspension as claimed in at least one of claims 1-10.

12. The shaped body as claimed in claim 11, wherein the substrate comprises a metallic or ceramic material, glass, plastic, paper, woven fabric or wood.

13. The shaped body as claimed in claim 11 and/or 12, wherein the hard material particles occupy 1-50%, preferably 5-50%, more preferably 10-40%, of the surface of the friction-increasing layer.

14. The shaped body as claimed in claim 13, wherein the substrate is a metallic plate or foil and the friction-increasing layer is applied to both sides of the plate or foil.

15. The shaped body as claimed in claim 11 and/or 12, wherein the substrate is a metallic plate or foil and the friction-increasing layer is applied to both sides of the plate or foil and the hard material particles preferably occupy 1-80%, more preferably 15-60%, of the respective surface of the friction-increasing layers.

16. A process for producing a shaped body as claimed in at least one of claims 11 to 15, which comprises the steps
a) provision of a substrate,
b) application of a suspension as claimed in at least one of claims 1-10 to at least part of the surface of the substrate,
c) drying of the coating obtained in this way and
d) optionally heat treatment of the coating obtained in step c) in order to cure the coating and/or mechanical treatment of the coating obtained in this way.

17. The process as claimed in claim 16, wherein the heat treatment for curing the coating in step d) is carried out at temperatures of 100-800°C.

18. The process as claimed in claim 16 and/or 17, wherein the mechanical treatment in step d) serves to compact the coating or press the hard material particles partly into the substrate.

19. The use of a shaped body as claimed in at least one of claims 11-13 for producing press or clamp connections in an assembly with a shaped body which if desired likewise has a friction-increasing layer, preferably for producing shrink fittings such as shaft-hub connections and flange connections.

20. The use of a shaped body as claimed in claim 14 as joining element for the friction-increasing, frictional joining of components.

21. The use of a shaped body as claimed in claim 15 as securing element for screw connections, which is used as intermediate layer between screw head and substrate material and/or between nut and substrate material.

22. The use of a shaped body as claimed in claim 11 and/or 12 for securing screw connections, wherein the friction-increasing layer is applied directly under the head of the screw and/or to the nut and/or to the substrate material and/or directly to the screwthread and the hard material particles preferably occupy 1-80%, more preferably 15-60%, of the respective surface of the friction-increasing layers.

## Revendications

1. Suspension destinée à fabriquer une couche augmentant le coefficient de friction sur un substrat, comprenant un milieu de suspension liquide, un agent liant en majeure partie anorganique, basé sur du SiO₂ ou ses composés précurseurs et des particules solides suspendues, choisies dans le groupe comprenant le diamant, le carbure de silicium et le carbure de bore.

2. Suspension selon la revendication 1, l'agent liant étant un nano-composite en précurseurs de SiO₂ issus de la fabrication via un procédé sol-gel, contenant des particules solides de l'ordre nanométrique.

3. Suspension selon la revendication 2, les particules solides de l'ordre nanométrique étant des particules d'oxydes métalliques, choisis de préférence parmi le SiO₂, le TiO₂, le ZrO₂, l'Al₂O₃, l'AlOOH, le Y₂O₃, le CeO₂, le c-BN, le BaSO₄, des mélanges de ces derniers ou des précurseurs desdites particules solides de l'ordre nanométrique, que par l'intermédiaire d'un processus sol-gel, on transforme en lesdites particules solides, de manière encore plus préférée des particules solides de SiO₂.

4. Suspension selon la revendication 1, l'agent liant pouvant être obtenu selon procédé sol-gel par transformation d'un ou de plusieurs silanes de la formule générale (I) :
RₓSiA₍₄₋ₓ₎ (I)
dans laquelle les radicaux A sont identiques ou différents et représentent des groupes hydroxyles ou des groupes hydrolysables, les radicaux R sont identiques ou différents et représentent des groupes non hydrolysables et x a la valeur 0, 1, 2 ou 3, pour au moins 50 % de la quantité de matière, le silane x étant ≥ 1.

5. Suspension selon la revendication 2 et/ou la revendication 3, l'agent liant pouvant être obtenu selon le procédé sol-gel par transformation d'un ou de plusieurs silanes de la formule générale (I), en présence des particules solides de l'ordre nanométrique ou de précurseurs desdites particules solides de l'ordre nanométrique, qui par l'intermédiaire du procédé sol-gel sont transformés en lesdites particules solides,
RₓSiA₍₄₋ₓ₎ (I)
dans laquelle les radicaux A sont identiques ou différents et représentent des groupes hydroxyles ou des groupes hydrolysables, les radicaux R sont identiques ou différents et représentent des groupes non hydrolysables et x a la valeur 0, 1, 2 ou 3, pour au moins 50 % de la quantité de matière, le silane x étant ≥ 1.

6. Suspension selon la revendication 1, l'agent liant comprenant des nano-particules de boehmite, de préférence d'une taille moyenne de particules dispersées de 1 à 100 nm, de manière plus préférée de 1 à 40 nm, de manière particulièrement préférée de 2 à 20 nm.

7. Suspension selon la revendication 6, l'agent liant comprenant un mélange d'un sol de boehmite et d'un sol de SiO₂, de préférence un mélange d'un sol de boehmite et d'un de SiO₂, dans un rapport de poids d'environ 1:1, en rapport à la teneur en solides des sols.

8. Suspension selon au moins l'une quelconque des revendications précédentes, le milieu de suspension liquide étant choisi parmi l'eau, des solvants contenant de l'eau, des solvants alcoolisés et des mélanges de ces derniers.

9. Suspension selon au moins l'une quelconque des revendications précédentes, les particules solides étant choisies dans le groupe comprenant le carbure de silicium et le diamant.

10. Suspension selon au moins l'une quelconque des revendications précédentes, les particules solides présentant une taille moyenne des particules d₅₀ de 1 à 100 µm, de préférence de 4 à 50 µm, de manière encore plus préférée de 10 à 40 µm.

11. Corps moulés, comprenant un substrat et une couche augmentant le coefficient de friction appliquée sur au moins une partie de la surface du substrat, qui comprend une matrice d'agent liant en majeure partie anorganique, basée sur du SiO₂ et des particules solides intégrées dans cette dernière, l'épaisseur de la matrice d'agent liant étant inférieure à la taille moyenne de particule des particules solides, de sorte que les particules solides saillissent hors de la matrice d'agent liant et la couche augmentant le coefficient de friction ayant été créée selon au moins l'une quelconque des revendications 1 à 10.

12. Corps moulé selon la revendication 11, le substrat étant constitué d'une matière métallique ou céramique, de verre, de matière plastique, de papier, de tissu ou de bois.

13. Corps moulé selon la revendication 11 et/ou la revendication 12, les particules solides couvrant de 1 à 50 %, de préférence de 5 à 50 %, de manière encore plus préférée de 10 à 40 % de la surface de la couche augmentant le coefficient de friction.

14. Corps moulé selon la revendication 13, le substrat étant un disque ou un film métallique et la couche augmentant le coefficient de friction étant appliquée sur les deux faces du disque ou du film.

15. Corps moulé selon la revendication 11 et/ou la revendication 12, le substrat étant un disque ou un film métallique et la couche augmentant le coefficient de friction étant appliquée sur les deux faces du disque ou du film et de préférence les particules solides recouvrant de 1 à 80 %, de manière encore plus préférée de 15 à 60 % de la surface concernée des couches augmentant le coefficient de friction.

16. Procédé destiné à fabriquer un corps moulé selon l'une quelconque des revendications 11 à 15, comprenant les étapes
a) prévoir un substrat,
b) appliquer une suspension selon au moins l'une quelconque des revendications 1 à 10 sur au moins une partie de la surface du substrat,
c) sécher le revêtement ainsi obtenu et
d) le cas échéant, traiter thermiquement le revêtement obtenu dans l'étape c) pour le solidifier et/ou traiter mécaniquement le revêtement ainsi obtenu.

17. Procédé selon la revendication 16, le traitement thermique destiné à solidifier le revêtement dans l'étape d) étant réalisé à des températures comprises en 100 et 800 °C.

18. Procédé selon la revendication 16 et/ou la revendication 17, le traitement mécanique dans l'étape d) étant destiné à compacter le revêtement ou à compresser en partie les particules solides dans le substrat.

19. Utilisation d'un corps moulé selon au moins l'une quelconque des revendications 11 à 13 pour la fabrication de liaisons par pressage ou par serrage dans un composite avec un corps moulé présentant au choix également une couche augmentant le coefficient de friction, de préférence pour la fabrication de frettes de serrage comme des liaisons arbre/moyeu et des liaisons par brides.

20. Utilisation d'un corps moulé selon la revendication 14 en tant qu'élément de liaison pour l'assemblage par complémentarité de force, augmentant la friction d'éléments de construction.

21. Utilisation d'un corps moulé selon la revendication 15 en tant qu'élément de blocage de liaisons par vissage, que l'on insère en tant que couche intermédiaire entre la tête de vis et le matériau d'appui et/ou entre l'écrou et le matériau d'appui.

22. Utilisation d'un corps moulé selon la revendication 11 et/ou la revendication 12 pour bloquer des liaisons par vissage, alors qu'on applique la couche augmentant le coefficient de friction directement sous la tête de vis et/ou sur l'écrou et/ou sur le matériau d'appui et/ou directement sur le filet de la vis et les particules solides couvrant de préférence de 1 à 80 %, de manière encore plus préférée de 15 à 60 % de la surface concernée des couches augmentant le coefficient de friction.
